# EUROPEAN PATENT SPECIFICATION

(11) **EP 1 647 081 B1**
(45) Date of publication and mention of the grant of the patent: **26.03.2008**
(21) Application number: 04744558.0
(22) Date of filing: 12.07.2004
(51) Int. Cl.: H02K 1/14

(54) **MOTOR WITH MODULAR STATOR SEGMENTS**
MOTOR MIT MODULAR AUFGEBAUTEN STATORSEGMENTEN
MOTEUR A SEGMENTS STATORIQUES MODULAIRES

(30) Priority: 11.07.2003 TR 200301082
(43) Date of publication of application: 19.04.2006
(73) Proprietor: Arçelik Anonim Sirketi, 34950 Istanbul (TR)
(72) Inventor: ACIKGOZ, Harun, Arcelik Anonim Sirketi, 34950 Istanbul (TR); EKIN, Cihat, Arcelik Anonim Sirketi, 34950 Istanbul (TR)
(86) International application number: PCT/IB2004/051199
(87) International publication number: WO 2005/006517

(56) References cited:
- WO-A-03/047071
- DE-A- 10 036 339
- DE-U- 20 301 532
- US-A1- 2003 038 556

## Description

The invention is related to a motor, which comprises a stator with attachable and detachable pieces.

In the state of art, the motors are designed to operate at a certain location where they provide the desired power, number of revolution etc., but when their location changes, producing a new motor with new parts, which are manufactured to meet the requirements of the new operating conditions is needed. For example, direct driven motors used in household appliances, particularly in washers/dryers, are designed respectively for each washer/dryer and can only be implemented to the washer/dryer that it's been designed for.

From the known embodiments of the art, in the US5818144 numbered American Patent, a linear motor is disclosed which utilizes more than one stator pieces instead of a circular shaped stator and which drives two sets of telescopic rotors and stators and a rotating drum.

The document US2003/0038556 discloses a motor in which a number of modules are arranged and adjusted for providing optimum power.

The object of the invention is to provide a motor according to claim 1, which reaches the desired drive power by attaching and detaching many stator pieces which forms itself and which could be used in different appliances without the need of a special design.

The motor realized in order to attain the objects of this invention has been illustrated in the attached drawings, wherein;

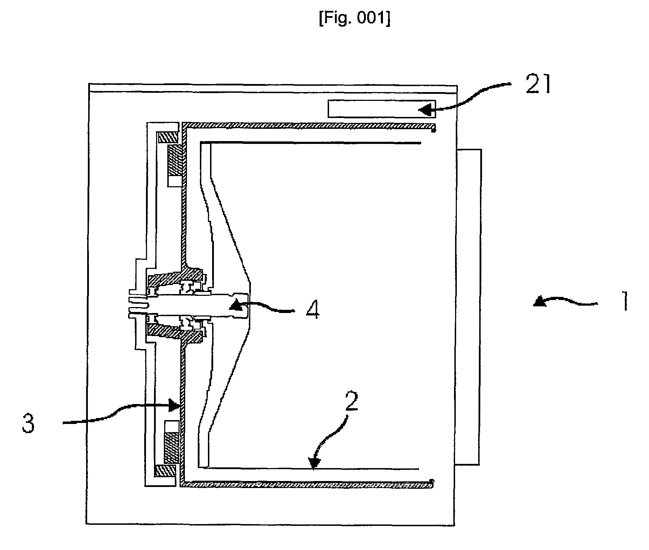

Figure 1 - is a schematic view of a washer/dryer.

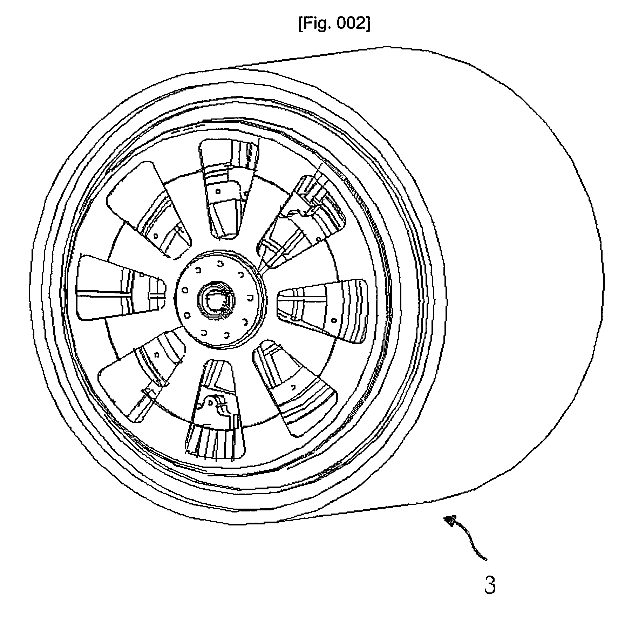

Figure 2 - is a perspective view of a tub on which a rotor and more than one stator group is placed.

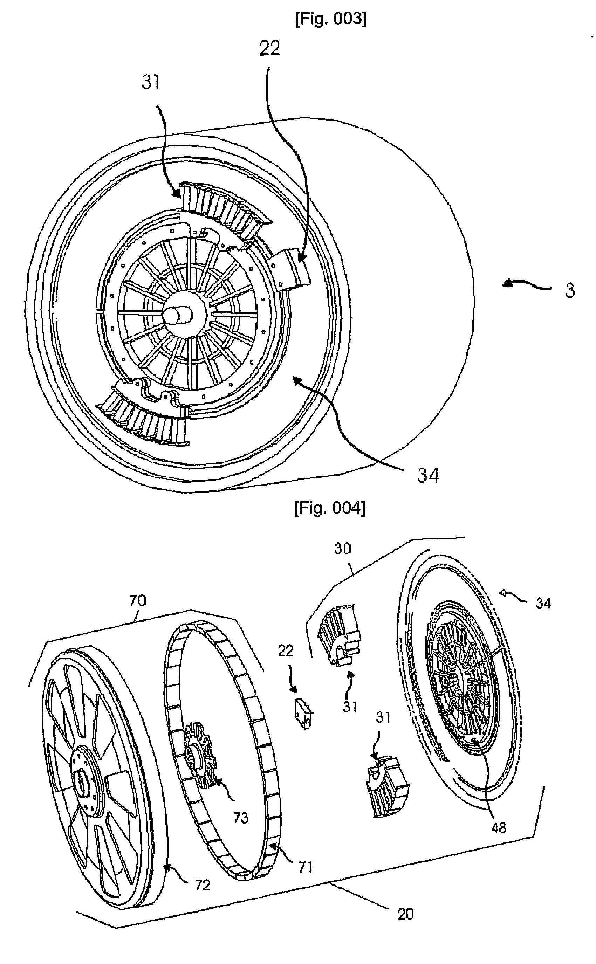

Figure 3 - is a perspective view of a tub on which two stator groups are placed.

Figure 4 - is an exploded view of a motor comprising stator support on which a rotor, a sensor and more than one stator group is placed.

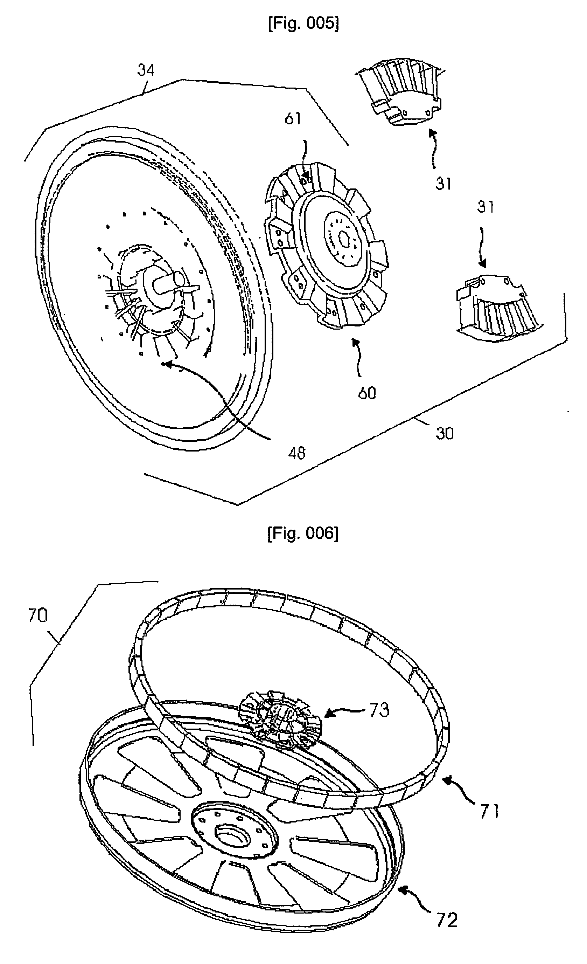

Figure 5 - is an exploded view of a stator wheel on which an adaptor part and more than one stator group is placed.

Figure 6 - is an exploded rear view of a rotor group.

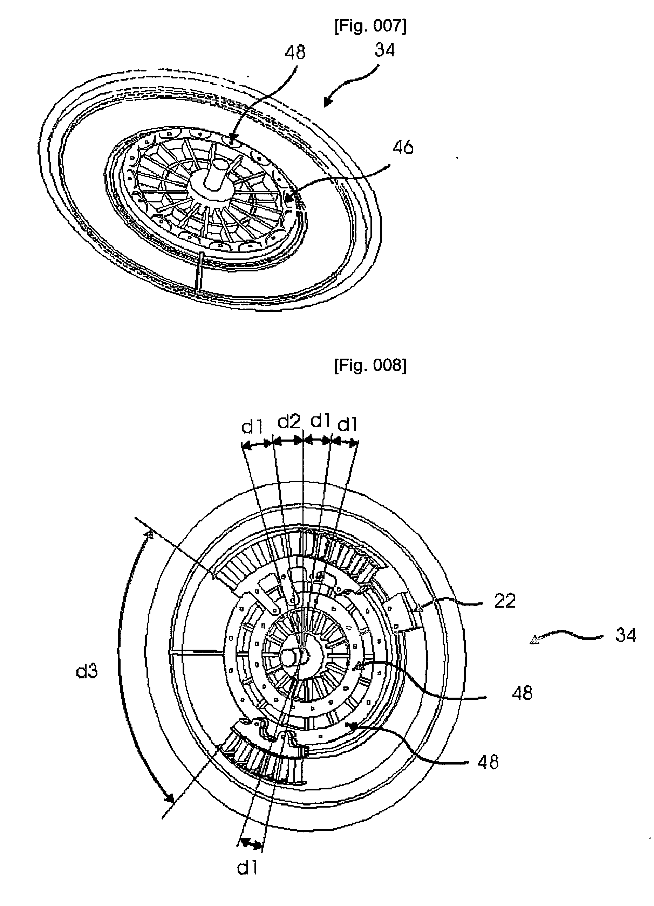

Figure 7 - is a perspective front view of a stator support comprising more than one segment recesses.

Figure 8 - is a perspective front view of one or more stator segments, comprising many fixing points at different positions, which are fixed in the fixing points that are at different positions and a stator support on which a sensor is fixed .

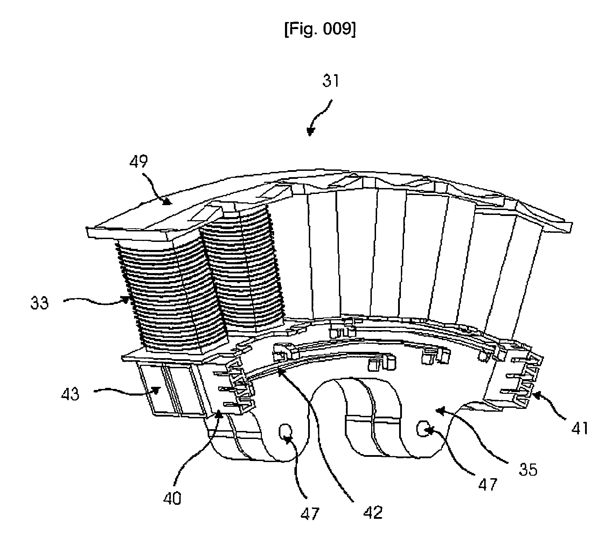

Figure 9 - is a three dimensional front view of a stator segment.

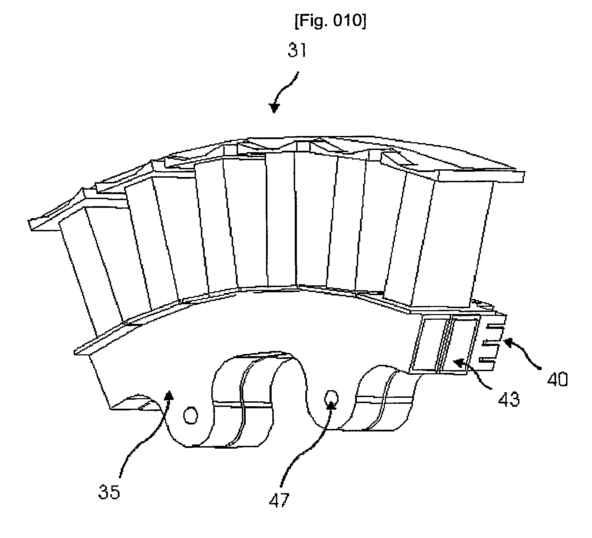

Figure 10 - is a three dimensional rear view of a stator segment.

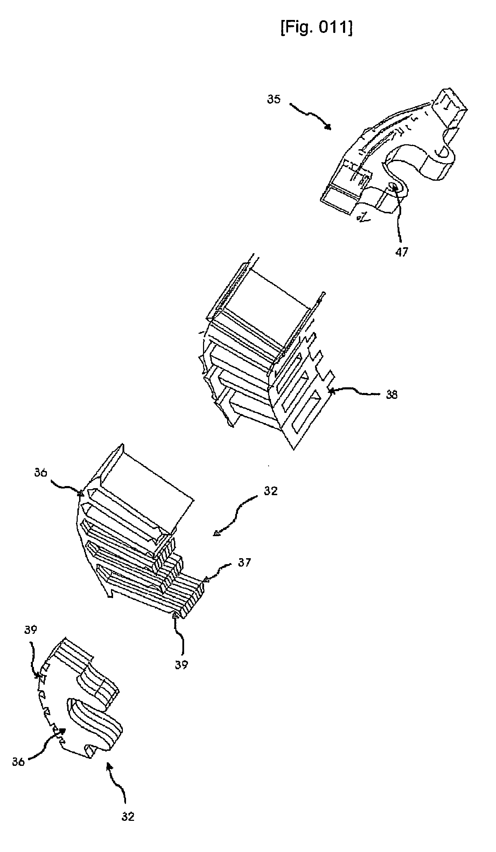

Figure 11- is a three dimensional exploded view of a stator segment.

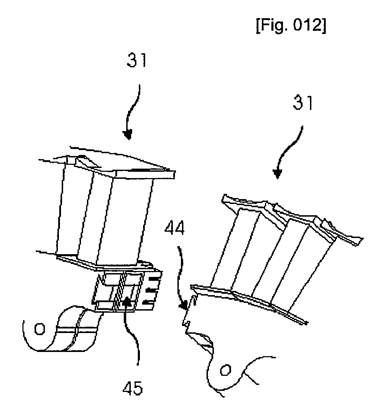

Figure 12 - is a perspective side by side view of two stator segments which have connection surfaces with fitting shapes to each other.

The components in the figures have each been numbered corresponding the following:

1. Household appliance

2. Drum

3. Tub

4. Shaft

20. Motor

21. Control card

22. Sensor

30. Stator

31. Stator segment

32. Stack

33. Winding

34. Stator support

35. Case

36. Stator lamination

37. Pole extension

38. Winding roller

39. Locking form

40. Input socket

41. Output socket

42. Bridge

43. Contact surface

44. Contact extension

45. Contact recess

46. Segment recess

47. Segment fixing point

48. Wheel fixing point

49. Stator outer surface

60. Adapter part

61. Adapter fixing point

70. Rotor

71. Rotor segment

72. Rotor carrier

73. Torque transmitter

The motor (20), which is the subject of the invention, is used preferably in household appliances, particularly in washers /dryers comprising a drum (2) wherein laundry is put, a tub (3) wherein the drum (2) is placed and a shaft (4) which is connected with the drum or it is used in motor-driven bicycles.

The motor (20) comprises a stator (30) which transforms the voltage it receives to a magnetic field, a rotor (70) which moves with the field formed by the stator (30), a sensor which is required to determine the condition and the position of the stator (30) and the rotor (70) and a control card (21) which enables controlling the stator (30) and the rotor (70) of the motor.

The rotor (70) comprises even numbers of preferably two rotor segments (71) which has magnetic features for instance, lamination packet, which is made of magnetic materials or materials that could be magnetized, which is in a shape and/or number where it could form dipole, a rotor carrier (72) which is placed on rotor segments (71), a torque transmitter (73) which transmits torque to the parts to be rotated such as the drum (2) with the help of the driver of the rotor carrier (72), for example shaft (4), which is moved by the rotor segments (71).

The stator (30) comprises stator segments (31) having appropriate form to the rotor (70), fixed to other or used individually s at a required quantity and position according to the required motor (20) power, and or a stator support (34) which is fixed on stator segments (31) such as the tub (3).

In the preferred embodiment, the rotor segment (7) is composed of one or more magnets, the sensor(s) (22) are placed at an appropriate position and quantities in accordance to the rotor segments (71) and stator segments (31) quantity and position.

The stator segment (31) comprises one or more stacks (32) which composes itself, one or more windings (33) which are made by wrapping of insulated wires over the stacks (32) with copper link, a case (35) made of insulated material, preferably made of plastic, which prevents the stack (32) from coming out of its place, which enables fastening to stator support (34) thus preventing electrical leakage, one or more segment fixing points (47) which is shaped like a recess and/or an extension that enables fastening, a stator outer surface (49) which is shaped like a spring that ensures the air gap between itself and the rotor (70) to remain fixed peripherally at all condition.

Each of the stator segments (31), when they are required to be placed side by side with other stator segment, comprises a side contact surface (43) which enables side by side placement without leaving any gaps in between them in order to maintain continuity of flux and to prevent any loses, an input socket (40), which enables receiving the voltage that is transferred from the network voltage and/or from the previous stator segment (31), on the case (35) and which has a form appropriate to the required phase quantity, a conductive bridge (42) which carries the voltage from the input socket (40) to the other winding (33) which has the same phase in the stator segment (31), an output socket (41) which has a form appropriate to the phase quantity and which carries the voltage received from the network, the previous stator segment (31) or the bridge (42) to the next stator segment (31) and/or the network connection.

Stator support (34) comprises one or more wheel fixing points (48) which have a shape of a recess and/or an extension that is appropriate to the segment fixing point (47), which ensures through its position and surface shape the distance (d2) between the middle axes of the windings (31) located at the point where the stator segments are placed adjacent to each other and the distance (d1) between the middle axes of the windings (33) to be equal, which ensures the distance (d3) between the stator segments (31) which are placed on itself that are not adjacent but next to each other and the distance (d1) between each middle axis of the winding (33) to be a whole number multiple, which establishes contact without leaving any gaps between the side contact surfaces in such a way that it prevents any loses in order to ensure the continuation of flux between the stator segments (31) which are placed adjacent to each other, which ensures the air gap between the stator segments (31) and the rotor (70) to remain fixed and which fastens the stator segments (31) and which prevents the stator segments (31) from coming out of their places after they are fastened.

Stator segments (31) are fastened on the stator support (34) in order to reach the maximum possible number of torque and revolution, in a circular form which encircles the rotor (70), in a way that it forms a full circular shape or in a circular shape formed by the rotor (70) that encircles it for lower number of torque and revolution, in a way that it partially forms a circular shape that provides the maximum force, in a position and quantity where the magnetic forces which are brought about when the voltage required is applied to reach the desired number of torques and revolution damaging the appliance on which they are placed on is prevented. The total number of the windings (33), which are on the stator segments (31) are fixed on the stator support (34), are a whole number multiple of the phase number required to be applied. The total number of windings (33), which are on the stator segments (31) are fixed adjacent to each other on the stator support (34) are also a whole number multiple of the phase number required to be applied and the distances (d1) between the whole middle axis of the winding (33) which are fixed adjacently on the stator segments (31) are equal.

The stack (32) comprises more than one stator laminations (36) that form itself by overlapping each other.

The stator segments (31), preferably manufactured in standard sizes, which are mounted in such a way that the segment fixing points (47) correspond to the wheel fixing points (48) by means of snap-fit, locking and preferably screws, meets all of the terms easily and also provides mounting convenience. Thus, the cost and process of production is decreased.

In the preferred embodiment of the invention, the stator segment (31) is composed of two stacks (32) which have winding (33) in between them and which are fastened to each other with tight fitting. In this embodiment, more than one stator laminations (36) which form one of the stacks (32), comprises a pole extension (37) wherein one end is connected to other extension while the other end remains open and a locking form (39) located at the end which remains open. The stator segment (31) comprises a winding roller (38), which enables, preferably with the help of the pole extension (37), to fasten on the winding. The other stack (32) which forms the stator segment (31) is comprised of more than one lamination plates (36) which are connected to each other and which has a form appropriate to that of the case (35) which prevents the winding (33) from coming out of the pole extension (37) by having a form appropriate to the locking form (39).

In this embodiment, stacks are formed by placing the stator laminations (36) one after the other at a desired quantity, fixing them together preferably by welding and/or by driving in pins. Apart from the stator laminations (36), winding (33) is formed by winding coil wire on winding roller (38) at a desired quantity. The coil wires on the winding are preferably coated with enameled material for insulation purposes. The winding roller (38) on the winding (33), is fixed on the pole extension (37), which is in the stack (32) and with the help of the locking form (39) both of the stacks (32) are rammed together. Thus, parting of the stacks (32) from each other and protruding of the windings (33) from their places, which are wedged in between, the stacks are prevented. After the prevention of the stacks (32) parting from each other, a case (35) is fixed on both ends and it is fastened on the stator support (34) with screws and the cable connections from the winding (33) are connected to each other, to the input socket (40) and the output socket (41).

The edges of the contact surface (43) are formed by the side edges of the case (35) and the middle part is formed by the side surface of the stack (32). When the stator segment (31) is used side by side with another stator segment (31), the contact surface of the two stator segments are in contact with each other. The stator segments' (31) windings (33), which are placed side by side, are connected to each other with the help of the input socket (40) and output socket (41) according to the required pole structure and the phase difference.

The motor, which is the subject of the invention, is designed both with a stator (30) comprised of one or more stator segments (31) which possess features, such as winding number, pole number, size etc., that provide the maximum number of torque and revolution that enables the household appliance to function and a rotor (70) which moves around the stator (30) and which is formed in a circular shape by the rotor segments (71) so that it encircles the circle formed by the stator (30) in a 360 degrees and it enables the household appliance (1) to operate at low power by placing stator segments (31), at a quantity less than the number of the stator segments (31) that could provide maximum power and equal to the required power, at appropriate quantities and positions in the same and/or different bodies without the need to make a different design even at powers lower than the maximum power.

In the preferred embodiment, the positions of the sensor (22), preferably Hall Sensor, the rotor (70) and the stator (30) are determined in relation to each other, the data obtained is processed by means of a control card (21) and operating and controlling the motor (20) at desired revolutions is ensured. The sensor (22), which is preferably placed in plastic protector, is fastened on the drum (2) or on the tub (3). In another embodiment of the invention, the sensor (22), during the production of the drum (2) which is preferably made of plastic, is placed in a casting and by being integrated with the material injected inside the casting it is taken out of the casting together with the drum (2) and it is used. The sensor (22) is placed in an appropriate quantity and positions according to the rotor segments' (71) and stator segments' (31) quantity and position.

In another embodiment of the invention wherein the sensor (22) isn't used, the motor is preferably composed of a stator (30) and a rotor (70) which are placed in such a way that they operate at a fixed speed.

The stator segments (31) of the motor (20), which is the subject of the invention, are placed preferably in a way that they are geometrically symmetrical to each other and that they divide a circle angularly into gaps with equal angles. In cases where they are not placed symmetrically or with equal angles, they are placed in positions and quantities wherein they possess geometry to damp the undesired forces that could take place.

The motor (20), which is the subject of the invention, can be composed of one or more stator segments (31), which have the same windings (33) quantity or of stator segments (31), which have different wire coil quantities (turn number) or different winding (33) quantities appropriate to the used phase quantity. For example, in one of the embodiments of the invention, instead of a 3 stator segments (31) composed of 12 windings (33) which are placed at 120 degree angles, 4 stator segments (31) composed of 9 windings (33) which are placed at 90 degree angles could be used which is appropriate to the rotor (70) that is composed of one or more rotor segments (71), preferably magnates placed side by side and which has a circular shape that has a diameter same as the tub. These embodiments, if used in, for example, 3 phased voltage and wherein, for instance 1, 2, 3, codes are given for each phase, 12 units of windings (33) are connected to bridges which enable them to operate (42) in a "123123123123" manner and 9 units of windings (33) are connected to bridges which enable them to operate (42) in a "123123123" manner and where each stator segment's phase defined as "1" and the other stator segments phase defined as "1" are connected to each other through input socket (40) and output socket (41) and are connected to the network according to the defined codes.

In another embodiment of the invention the stator support (34) comprises one or more segment recesses (46) which fastens the stator segments (31) and which prevents them from coming out of their places, which comprise a wheel fixing point (48) which has a shape of a recess and/or an extension that is appropriate to the segment fixing point (47) which ensures through its position and shape the distance (d2) between the middle axis of the winding (31) located at the point where the stator segments are placed adjacent to each other is equal to the distance (d1) between middle axis of the windings (33), which ensures the distance (d3) between the stator segments (31) which are placed on itself that are not adjacent but next to each other, is equal to a whole number multiple of the distance (d1) between each middle axis of the windings (33), which establishes contact without leaving any gaps between the side contact surfaces in such a way that it prevents any loses in order to ensure the continuation of flux between the stator segments (31) which are placed adjacent to each other, which ensure the air gap between the stator segments (31) and the rotor (70) to remain fixed, which are fixed on the stator segments (31), which has a form appropriate to the form of the stator segments (31) and which does not obstruct the stator segments' (31) operation or performance and their connection to each other according to the phase difference that is to be applied.

In another embodiment of the invention, the stator support (34); comprises one or more adapter parts (60) which fastens the stator segments (31) and which prevents them from coming out of their places, which comprise a adapter fixing point (61) which has a shape of a recess and/or an extension that is appropriate to the segment fixing point (47) and wheel fixing point (48), which ensures through its position and shape the distance (d2) between the middle axis of the windings (31) located at the point where the stator segments are placed adjacent to each other is equal to the distance (d1) between windings (33), which ensures the distance (d3) between the stator segments (31) which are placed on itself that are not adjacent but next to each other is equal to a whole number multiple of the distance (d1) between each middle axis of the winding (33), which establishes contact without leaving any gaps between the side contact surfaces in such a way that it prevents any loses in order to ensure the continuation of flux between the stator segments (31) which are placed adjacent to each other, which ensure the air gap between the stator segments (31) and the rotor (70) to remain fixed and which are fixed on the stator segments (31).

In one embodiment of the invention, the stator segment (31) comprises a side contact surface (43), which has a contact recess (45) and/or a contact extension (44) which are appropriate to its shape and which ensures contact without leaving any gaps between themselves. Thus, when a stator segment (31) is side by side with another stator segment (31), the contact extension (44) and/or contact recess (45) on the side contact surfaces (43) are interconnected to each other and are fixed to each other in such a way that there are not any gaps. In this way, there are not any gaps between the stator segments (31) placed in the segment recesses (46) and thus the motor's (20) malfunction and low performance due to flux obstruction is prevented.

In another embodiment of the invention, the stator segment (31) is composed of a single winding (33) fixed on the stack (32) and a single winding roller (38) and these stator segments (31) with single windings (33) compose stator segments (31) which are grouped by bringing them together side by side at a desired quantity and by placing the stator segments (31) at a desired quantity and at a position a motor with a desired power is obtained. In this embodiment, the windings (33) are connected to the network and to each other in accordance to the phase to be applied.

In addition to all these, by changing the number of windings of the wires which compose the winding (33) without effecting each others' placement, motors which have the same windings (33) and stator segments (31) and with different powers could be obtained.

With the embodiment, which is the subject of the invention, design flexibility, production convenience and motors, which obtain torque and revolution values in a short period of time is provided. In addition to design and production conveniences, very important time and cost advantages are obtained in production and services as the parts, which compose the motor (20), such as the stator segment (31), stator support (34), and rotor segment (71), can be manufactured, stored and assembled at standard sizes.

## Claims

1. A motor (20) comprising:
a stator (30) which is preferably used in household appliances, particularly washer/dryers and which converts an applied voltage to a magnetic field,
a rotor (70) which encircles the stator (30) and which is in a shape and/or number where it could form a dipole that moves with the field formed by the stator (30);
wherein the rotor (70) comprises several rotor segments (71) composed of one or more magnets;
wherein the stator (30) comprises several stator segments (31),
a circular stator support (34) comprising fixing points (48) in the form of recesses or extensions;
wherein each stator segment comprises
one or more stacks (32), for instance a lamination packet made of a flux conductive material , the stacks (32) having pole extensions (39);
one or more windings (33) made by wrapping insulated wires over the pole extensions (39) of the stacks (32);
a side contact surface (43) enabling certain stator segments (31) to be placed side by side and providing continuity of the flux by ensuring a connection without any gaps when the stator segments (31) are placed adjacently to one another wherein the side surface is preventing any losses,
an arc shaped stator outer surface (49) that ensures that the air gap between the stator (30)and the rotor (70) remains fixed in a peripheral direction at all condition,
a case (35) made of an insulated material, preventing the stacks (32) from coming out of their place and located on the periphery of the stacks (32) opposed to the pole extensions (39);
one or more segment fixing points (47) shaped like recesses or extensions of the case (35) that enable the stator segment (31) to be fastened to the stator support (34) by cooperating with the stator support fixing points (48);
and wherein the number of stator segments (31) fastened to the stator support is such that a full circle is when the maximum output torque and speed of the motor are required (20);
and wherein a smaller number of stator segments (31) are fastened at appropriate places on the stator support to form a partial circular shape when lower output torque and speed of the motor are required (20);wherein stator segments (31) are fastened to the stator support (34) side by side to form groups, those groups being placed at a circumferential distance from other groups such that the side contact surface of a stator segment of a group is not in contact with the side contact surface of the stator segment of an adjacent group;
wherein the total number of the windings (33) which are wound on the stator segments (31) is a multiple of the number of phases of the voltage applied; wherein the number of windings (33) wound an stator segments (31) which are fixed side by side on the stator support (34), is also a multiple of the number of the phases of the voltage applied;
wherein the circumferential distance (d1) between the middle axis of the windings (33) which are on the same stator segment (31) is the same for all the windings (33);
and wherein the circumferential distance (d2) between the middle axis of the windings (33) located at the point where the stator segments (31) are placed side by side is the same as d1;
and wherein the groups made of several stator segments fastened side by side are placed that there is a circumferential distance (d3) which is a multiple of d1 between them.

2. A motor (20) as defined in claim one **characterized** with a stator support (34) comprising one or more adapter parts (60);
comprising one or more adapter fixing points (61) which has shape of a recess and/or extension that are appropriate to the segment fixing point (47) and wheel fixing point (48) that fasten the stator segments (31) to the stator support (34) and which prevents the stator segments (31) from coming out of their places after they are fastened,
which establishes contact without leaving any gaps between the side contact surfaces (43) in such a way that it prevents any loses in order to ensure the continuation of flux between the stator segments (31) which are placed adjacent to each other,
which ensures the air gap between the stator segments (31) and the rotor (70) to remain fixed and
on which the stator segments are fixed (31).

3. A motor (20) as defined in the Claims 1 or 2 **characterized by** a stator segment (31) comprising a side contact surface (43) having a plane form.

4. A motor (20) as defined in the Claims lor 2**characterized by** a stator segment (31) comprising a side contact surface (43), which has a contact recess (45) and/or a contact extension (44) which are appropriate to its shape and which ensures contact without leaving any gaps between themselves.

5. A motor (20) as defined in any of the claims above **characterized** with one or more sensors (22) which determine the state and positions of the stator (30) and/or rotor (70) and which are placed in accordance to the rotor segments (71) and stator segments' (31) quantity and position.

6. A motor (20) as defined in Claim 4 **characterized** with a control card (21), which enables control of the stator (30) and the rotor (70) as desired according to the data received from the sensors (22).

7. A motor (20) as defined in any of the claims above **characterized** with a stator segment (31) comprising a case (35) made of insulated material, preferably made of plastic, which prevents the stack (32) from coming out of its place, which enables fastening thus preventing electrical leakage.

8. A motor (20) as defined in any of the claims above **characterized** with a stack (32) comprising more than one stator lamination (36) that are placed on top of each other, so as to form the stack (2).

9. A motor (20) as defined in Claim 8 **characterized** with a stator lamination (36) comprising a pole extension (37), which forms the stack (32) by joining together, wherein one end is connected to each other whilst the other remains open and a locking form (39) located at the end which remains open.

10. A motor (20) as defined in Claim 9 **characterized** with a stator segment (31) comprising a winding roller (38), which enables the winding (33) to be fixed on the pole extension (37).

11. A motor (20) as defined in Claim 10 **characterized** with a stator segment (31) which are placed side by side and which are connected to each other with the help of the input socket (40) and output socket (41) according to the required pole structure and the phase difference, comprises an input socket (40) which has a form appropriate to the required phase quantity, which enables receiving the voltage that is transferred from the network voltage on the case (35) and/or from the previous stator segment (31), a conductive bridge (42) which carries the voltage from the input socket (40) to the other windings (33) which has the same phase in the stator segment (31), which comprises an output socket (41) which has a form appropriate to the phase quantity and which carries the voltage received from the network, the previous stator segment (31) or the bridge (42) to the next stator segment (31) and/or the network connection,

12. A motor (20) as defined in Claim 1-11 **characterized** with a stator segment (31), which are placed symmetrically to each other in order to prevent its body to be exposed to unwanted forces.

13. A motor (20) as defined in Claim 1-12 **characterized** with a stator segment (31) which are not symmetric to each other and which possess geometry to damp the undesired forces that could take place.

14. A motor (20) as defined in any of the claims above **characterized** with a stator (30) which is connected to a drum (2) wherein laundry is put, a tub (3) wherein drum (2) is located, and a shaft (4) which is connected to the tub (3), which are used in washer/dryers, and a rotor (70) which is placed on the tub (3) in such a way that it encircles stator (30) fixed on the tub (3) and which rotates the drum (2) by transferring the movement that it forms with shaft (4) that it is connected to.

## Patentansprüche

1. Motor (20), umfassend:
einen Ständer (30), der vorzugsweise in Haushaltsgeräten benutzt wird, insbesondere in Wasch-/Trockenvorrichtungen, und der eine angelegte Spannung in ein Magnetfeld umwandelt,
einen Rotor (70), der den Ständer (30) umkreist, und der eine Form und/oder Anzahl aufweist, in der er einen Dipol bilden kann, der sich mit dem Feld bewegt, das von dem Ständer (30) gebildet wird;
wobei der Rotor (70) mehrere Rotorsegmente (71) umfasst, die aus einem oder mehreren Magneten zusammengesetzt sind;
wobei der Ständer (30) mehrere Ständersegmente (31) umfasst,
eine kreisförmige Ständerhalterung (34), die Befestigungspunkte (48) in der Form von Aussparungen oder Vorsprüngen umfasst;
wobei jedes Ständersegment Folgendes umfasst:
einen oder mehrere Stapel (32), beispielsweise ein Schichtkörperpaket, das aus einem Kraftfluss leitenden Material besteht, wobei die Stapel (32) Polvorsprünge (39) aufweisen;
eine oder mehrere Wicklungen (33), die hergestellt sind, indem isolierte Drähte um die Polvorsprünge (39) der Stapel (32) gewickelt sind;
eine Seitenkontaktfläche (43), die es ermöglicht, dass bestimmte Ständersegmente (31) Seite an Seite angeordnet sind, und die eine Kontinuität des Kraftflusses bereitstellt, indem sie eine Verbindung ohne Zwischenräume sicherstellt, wenn die Ständersegmente (31) benachbart zueinander angeordnet sind, wobei die Seitenfläche Verluste verhindert,
eine bogenförmige Ständeraußenfläche (49), die sicherstellt, dass der Luftzwischenraum zwischen dem Ständer (30) und dem Rotor (70) unter allen Bedingungen in einer Umfangsrichtung fest angeordnet bleibt,
ein Gehäuse (35), das aus einem isolierten Material hergestellt ist, und das verhindert, dass die Stapel (32) sich verschieben, und das am Umfang der Stapel (32) gegenüber den Polvorsprüngen (39) angeordnet ist;
einen oder mehrere Segmentbefestigungspunkte (47), die wie Aussparungen oder Vorsprünge des Gehäuses (35) geformt sind, und durch die es möglich ist, dass das Ständersegment (31) an der Ständerhalterung (34) durch Zusammenwirken mit den Befestigungspunkten (48) der Ständerhalterung befestigt ist;
und wobei die Anzahl der Ständersegmente (31), die an der Ständerhalterung befestigt sind, derart ist, dass ein vollständiger Kreis vorliegt, wenn das maximale Ausgangsdrehmoment und die maximale Drehzahl des Motors (20) benötigt werden;
und wobei eine geringere Anzahl von Ständersegmenten (31) an geeigneten Stellen an der Ständerhalterung befestigt ist, um so eine Teilkreisform zu bilden, wenn ein geringeres Ausgangsdrehmoment und eine geringere Drehzahl des Motors (20) benötigt werden; wobei die Ständersegmente (31) Seite an Seite an der Ständerhalterung (34) befestigt sind und auf diese Weise Gruppen bilden, wobei diese Gruppen mit einem Umfangsabstand von anderen Gruppen entfernt sind, derart, dass die Seitenkontaktfläche eines Ständersegments einer Gruppe nicht in Kontakt mit der Seitenkontaktfläche des Ständersegments einer benachbarten Gruppe steht;
wobei die Gesamtzahl der Wicklungen (33), die an den Ständersegmenten (31) gewickelt sind, ein Vielfaches der Anzahl von Phasen der angelegten Spannung beträgt, wobei die Anzahl der Wicklungen, die an den Ständersegmenten (31) gewickelt sind, welche Seite an Seite an der Ständerhalterung (34) befestigt sind, auch ein Vielfaches der Anzahl der Phasen der angelegten Spannung beträgt;
wobei der Umfangsabstand (d1) zwischen der Mittelachse der Wicklungen (33), die sich an demselben Ständersegment (31) befinden, für alle Wicklungen (33) gleich ist;
und wobei der Umfangsabstand (d2) zwischen der Mittelachse der Wicklungen (33), die an dem Punkt angeordnet sind, an dem die Ständersegmente (31) Seite an Seite angeordnet sind, derselbe wie d1 ist;
und wobei die Gruppen, die aus mehreren Ständersegmenten gebildet sind, welche Seite an Seite befestigt sind, so angeordnet sind, dass ein Umfangsabstand (d3) vorliegt, der ein Vielfaches von d1 zwischen diesen ist.

2. Motor (20) nach Anspruch 1, **gekennzeichnet durch** eine Ständerhalterung (34), die ein oder mehrere Adapterteile (60) umfasst;
wobei diese einen oder mehrere Adapterbefestigungspunkte (61) umfassen, die die Form einer Aussparung und/oder eines Vorsprungs aufweisen, die geeignet für die Segmentbefestigungspunkte (47) und Radbefestigungspunkte (48) ist, welche die Ständersegmente (31) an der Ständerhalterung (34) befestigen, und die verhindern, dass die Ständersegmente (31) sich nach ihrer Befestigung verschieben,
was einen Kontakt herstellt, ohne Zwischenräume zwischen den Seitenkontaktflächen (43) zu erzeugen, derart, dass Verluste verhindert werden, um die Kontinuität des Kraftflusses zwischen den Ständersegmenten (31) sicherzustellen, die benachbart zueinander angeordnet sind,
was sicherstellt, dass der Luftzwischenraum zwischen den Ständersegmenten (31) und dem Rotor (70) unverändert bleibt, und
an denen die Ständersegmente (31) befestigt sind.

3. Motor (20) nach Anspruch 1 oder 2, **dadurch gekennzeichnet, dass** ein Ständersegment (31) eine Seitenkontaktfläche (43) mit einer flachen Form umfasst.

4. Motor (20) nach Anspruch 1 oder 2, **dadurch gekennzeichnet, dass** ein Ständersegment (31) eine Seitenkontaktfläche (43) umfasst, die eine Kontaktaussparung (45) und/oder einen Kontaktvorsprung (44) aufweist, die und/oder der für ihre Form geeignet ist, und die einen Kontakt sicherstellt, ohne Zwischenräume dazwischen zu erzeugen.

5. Motor (20) nach einem der vorangehenden Ansprüche, **gekennzeichnet durch** einen oder mehrere Sensoren (22), die den Zustand und die Position des Ständers (30) und/oder Rotors (70) bestimmen, und die entsprechend der Menge und der Position der Rotorsegmente (71) und der Ständersegmente (31) angeordnet sind.

6. Motor (20) nach Anspruch 4, **gekennzeichnet durch** eine Steuerungskarte (21), die es ermöglicht, den Ständer (30) und den Rotor (70) dem Bedarf entsprechend gemäß den Daten zu steuern, die von den Sensoren (22) empfangen werden.

7. Motor (20) nach einem der vorangehenden Ansprüche, **dadurch gekennzeichnet, dass** ein Ständersegment (31) ein Gehäuse (35) umfasst, das aus isoliertem Material hergestellt ist, vorzugsweise aus Kunststoff, und das verhindert, dass der Stapel (32) seine Position verlässt, was eine Befestigung ermöglicht, und so einen Kriechverlust verhindert.

8. Motor (20) nach einem der vorangehenden Ansprüche, **gekennzeichnet durch** einen Stapel (32), der mehr als einen Ständerschichtkörper (36) aus übereinander gestapelten Ständern umfasst, wodurch der Stapel (32), ausgebildet ist.

9. Motor (20) nach Anspruch 8, **gekennzeichnet durch** einen Ständerschichtkörper (36), der einen Polvorsprung (37) umfasst, und der **durch** Verbinden den Stapel (32) bildet, wobei ein Ende mit einem jeweils anderen verbunden ist, während das andere offen bleibt, und eine Sperrform (39) an dem offen bleibenden Ende angeordnet ist.

10. Motor (20) nach Anspruch 9, **gekennzeichnet durch** ein Ständersegment (31), das eine Wickelrolle (38) umfasst, die es ermöglicht, dass die Wicklung (33) an dem Polvorsprung (37) befestigt werden kann.

11. Motor (20) nach Anspruch 10, **gekennzeichnet durch** ein Ständersegment (31), das Seite an Seite angeordnet ist, und das mit Hilfe der Eingangsanschlussbuchse (40) und der Ausgangsanschlussbuchse (41) entsprechend der benötigten Polstruktur und der Phasendifferenz miteinander verbunden ist, und das eine Eingangsanschlussbuchse (40) umfasst, die eine Form aufweist, die für die benötigte Phasenanzahl geeignet ist, und die es ermöglicht, die Spannung zu empfangen, die von der Netzspannung an dem Gehäuse (35) und/oder dem vorangehenden Ständersegment (31) übertragen wird, eine leitende Brücke (42), die die Spannung von der Eingangsanschlussbuchse (40) zu den anderen Wicklungen (33) trägt, die dieselbe Phase im Ständersegment (31) aufweisen, das eine Ausgangsanschlussbuchse (41) umfasst, die eine Form aufweist, die für die Phasenanzahl geeignet ist, und die die vom Netz, von dem vorangehenden Ständersegment (31) oder von der Brücke (42) empfangene Spannung zum nächsten Ständersegment (31) und/oder der Netzverbindung trägt.

12. Motor (20) nach Anspruch 1 bis 11, **gekennzeichnet durch** ein Ständersegment (31), das symmetrisch zueinander angeordnet ist, um zu verhindern, dass sein Körper unerwünschten Kräften ausgesetzt ist.

13. Motor (20) nach Anspruch 1 bis 12, **gekennzeichnet durch** ein Ständersegment (31), das nicht symmetrisch zueinander ist, und das eine Geometrie aufweist, um die unerwünschten Kräfte zu dämpfen, die auftreten können.

14. Motor (20) nach einem der vorangehenden Ansprüche, **gekennzeichnet durch** einen Ständer (30), der mit einer Trommel (2) verbunden ist, in die Wäsche gefüllt wird, einem Kessel (3), in dem die Trommel (2) angeordnet ist, und einer Welle (4), die mit dem Kessel (3) verbunden ist, welche in Wasch-/Trockenvorrichtungen benutzt werden, und **durch** einen Rotor (70), der derart an dem Kessel (3) angeordnet ist, dass er den Ständer (30) umkreist, der an dem Kessel (3) befestigt ist, und der die Trommel (2) dreht, indem er die von ihm erzeugte Bewegung mit Hilfe der Welle (4) überträgt, mit der er verbunden ist.

## Revendications

1. Un moteur (20) comprenant :
un stator (30) utilisé de préférence dans des applications de ménage, particulièrement dans des machines à laver/sécher et qui transforme un voltage appliqué en un champ magnétique, un rotor (70) qui encercle le stator (30) et qui est capable par sa forme et/ou son nombre de former un dipôle qui se mettrait en mouvement grâce au champ formé par le stator (30) ;
dans lequel le rotor (70) comprend plusieurs segments de rotor (71) composés d'un ou de plusieurs aimants ;
dans lequel le stator (30) comprend plusieurs segments de stator (31),
un support circulaire de stator (34) comprenant des points de fixation (48) sous forme des replis ou extensions ;
dans lequel chaque segment de stator comprend
un ou plusieurs empilements (32), par exemple un paquet de laminage fait d'un flux de matériel conducteur, les empilements (32) ayant des extensions polaires (39) ;
un ou plusieurs bobinage(s) (33) fait de câbles isolés enroulés sur les extensions polaires (39) des empilements (32) ;
une surface latérale de contact (43) permettant à certains segments de stator (31) d'être placés côte à côte et assurant la continuité du flux en garantissant une connexion sans aucune ouverture lorsque les segments de stator (31) sont placés de façon adjacente les uns à côté des autres où la surface latérale est empêchée de toute perte,
un stator sous forme d'arc sur la surface extérieure (49) qui assure que l'ouverture d'air entre le stator (30) et le rotor (70) reste fixée dans une direction périphérique dans tous les cas,
une case (35) faite d'un matériel isolé empêchant les empilements (32) de sortir de leur place et placée sur la périphérie des empilements (32) à l'opposé des extensions polaires (39) ;
un ou plusieurs points de fixation (47) des segments sous forme des plis ou extensions de la case (35) qui permettrait au segment de stator (31) de rester attaché au support de stator (34) en coopération avec les points de fixation (48) du support de stator ;
et dans lequel le nombre des segments de stator (31) liés au support de stator est suffisant pour former un cercle lorsqu'il est requis un torque maximum de sortie et une vitesse maximum de moteur (20) ;
et dans lequel le nombre des segments de stator (31) liés aux places appropriées sur le support de stator est plus petit mais suffisant pour former une forme partiellement circulaire lorsqu'il est requis un torque de sortie plus bas et une vitesse de moteur plus basse (20) ; dans lequel les segments de stator (31) sont attachés au support de stator (34) côte à côte pour former des groupes, qui seraient placés à une distance circonférentielle des autres groupes de façon à s'assurer que la surface latérale de contact d'un segment de stator d'un groupe ne soit pas en contact avec la surface latérale de contact d'un segment de stator d'un groupe adjacent ;
dans lequel le nombre total des bobinages (33) enroulés sur les segments de stator (31) est équivalent à multiple nombre des phases de voltage appliqué. Dans lequel le nombre des bobinages (33) enroulés sur les segments de stator (31) fixés côte à côte sur le support de stator (34) est équivalent également à multiple nombre de phases de voltage appliqué ;
dans lequel la distance circonférentielle (d1) entre l'axe au milieu des bobinages (33) qui sont sur le même segment de stator (31) est la même pour tous les bobinages (33) ;
et dans lequel la distance circonférentielle (d2) entre l'axe au milieu des bobinages (33) placés là où les segments de stator (31) sont placés côte à côte est la même que d1 ;
et dans lequel les groupes faits de divers segments de stator attachés côte à côte sont placés de façon à former une distance circonférentielle (d3) équivalent à plusieurs d1 entre eux.

2. Un moteur (20) selon la revendication 1, **caractérisé par** un support de stator (34) comprenant un ou plusieurs partie(s) d'adaptateur (60) ;
comprenant un ou plusieurs points de fixation d'adaptateur (61) qui ont la forme de repli et/ou d'extension appropriée pour le point de fixation de segment (47) et pour le point de fixation de tour (48) qui attache les segments de stator (31) au support de stator (34) et qui empêche les segments de stator (31) de sortir de leur place une fois qu'ils y sont attachés,
qui établit aussi un contact sans aucune ouverture entre les surfaces latérales de contact (43) de façon à empêcher toutes pertes pour assurer la continuité des flux entre les segments de stator (31) placés d'une manière adjacente les uns à côté des autres,
qui permet également une ouverture d'air entre les segments de stator (31) et le rotor (70) pour conserver fixé ce dernier sur lequel les segments de stator sont fixés (31).

3. Un moteur (20) selon la revendication 1 ou 2, **caractérisé par** un segment de stator (31) comprenant une surface latérale de contact (43) ayant la forme plate.

4. Un moteur (20) selon la revendication 1 ou 2, **caractérisé par** un segment de stator (31) comprenant une surface latérale de contact (43) qui a un enfoncement de contact (45) et/ou une extension de contact (44), qui conviennent à leur forme et qui assurent le contact entre eux-mêmes sans qu'il y ait une ouverture.

5. Un moteur (20) selon l'une des revendications précédentes, **caractérisé par** un ou plusieurs capteur(s) (22) qui déterminent l'état et la position du stator (30) et/ou du rotor (70) et qui sont placés conformément à la quantité et aux positions des segments de rotor (71) et des segments de stator (31).

6. Un moteur (20) selon la revendication 4, **caractérisé par** une carte de contrôle (21) qui assure le contrôle du stator (30) et du rotor (70) comme on souhaiterait, en fonction des données reçues des capteurs (22).

7. Un moteur (20) selon l'une des revendications précédentes, **caractérisé par** un segment de stator (31) comprenant une case (35) faite de matériel isolé, de préférence de plastique, qui empêche les empilements (32) de sortir de leur place et qui par conséquent active les connexions en empêchant les fuites d'électricité.

8. Un moteur (20) selon l'une des revendications précédentes, **caractérisé par** un empilement (32) comprenant un ou plusieurs laminages de stator (36) placés les uns sur les autres pour constituer ainsi la forme d'empilement (2).

9. Un moteur (20) selon la revendication 8, **caractérisé par** un laminage de stator (36) comprenant une extension polaire (37) qui constitue l'empilement (32) en se joignant les unes et les autres, dont l'une extrémité est connectée pour chacune, même si l'autre extrémité reste ouverte, et une forme de verrouillage (39) placée sur l'extrémité qui reste ouverte.

10. Un moteur (20) selon la revendication 9, **caractérisé par** un segment de stator (31) comprenant un rouleau de bobinage (38) qui permet au bobinage (33) de se fixer sur l'extension polaire (37).

11. Un moteur (20) selon la revendication 10, **caractérisé par** des segments de stator (31) placés côte à côte et attachés les uns aux autres à l'aide de la prise d'entrée (40) et de la prise de sortie (41) conformément à la structure polaire requise et à la différence de phase, qui comprennent par conséquent une prise d'entrée (40) ayant une forme convenable à la quantité de phase requise, activant la réception du voltage transmis du voltage du réseau à la case (35) et/ou du segment de stator précédent (31), un pont conducteur (42) transmettant le voltage venant de la prise d'entrée (40) aux autres bobinages (33) ayant la même phase dans le segment de stator (31), qui comprend une prise de sortie (41) ayant une forme convenable à la quantité de phase requise et transmettant le voltage venant du réseau et/ou du segment de stator précédent (31) ou du pont (42) au segment de stator suivant (31) et/ou à la connexion du réseau.

12. Un moteur (20) selon les revendications de 1 à 11, **caractérisé par** des segments de stator (31) placés d'une manière symétrique les uns aux autres de façon à empêcher leur corps d'être exposé aux forces inattendues.

13. Un moteur (20) selon les revendications de 1 à 12, **caractérisé par** des segments de stator (31) qui ne sont pas symétriques les uns aux autres et qui possèdent une géométrie pouvant éviter les forces non voulues qui peuvent éventuellement se produire.

14. Un moteur (20) selon l'une des revendications précédentes, **caractérisé par** un stator (30) connecté à un tambour (2) dans lequel du linge à laver est mis, un cuvier (3) dans lequel le tambour (2) est placé, et un arbre de transmission (4) connecté au cuvier (3) pour utiliser dans les machines à laver/sécher, et un rotor (70) placé sur le cuvier (3) de façon à encercler le stator (30) fixé sur le cuvier (3) et qui tourne le tambour (2) en transmettant le mouvement formé par l'arbre de transmission (4) auquel il est lié.
